# DEMANDE DE BREVET EUROPEEN

(11) **EP 4 801 003 A2**
(43) Date de publication de la demande: **02.09.2026**
(21) Numéro de dépôt: 26192657.0
(22) Date de dépôt: 21.11.2018
(51) Int. Cl.: H04L 45/02

(54) **PROCEDE D'ETABLISSEMENT AUTOMATIQUE PAR UN PREMIER DISPOSITIF D'UNE SESSION CONFORME A UN PROTOCOLE DE ROUTAGE DYNAMIQUE AVEC UN DEUXIEME DISPOSITIF**

(30) Priorité: 28.11.2017 FR 1761315
(62) Numéro(s) de document de la (des) demande(s) initiale(s) en application de l'article 76 CBE: 18816204.4 / 3 718 257
(71) Demandeur: Orange, 92130 Issy-les-Moulineaux (FR)
(72) Inventeur: BOUCADAIR, Mohamed, 92326 Châtillon Cédex (FR); JACQUENET, Christian, 92326 Châtillon Cédex (FR)
(74) Mandataire: Cabinet Beau de Loménie

(57) **Abrégé**

Le procédé d'établissement comprend, suite à la détection (E40) par le premier dispositif de l'existence (E30) d'une connectivité avec le deuxième dispositif, le premier dispositif étant associé à un premier numéro de système autonome (ASN(T)) et ne connaissant pas de numéro de système autonome associé au deuxième dispositif :
- une étape d'échange (E50-E80) avec le deuxième dispositif comprenant :
∘ l'annonce (E50) au deuxième dispositif du premier numéro de système autonome (ASN(T)), et :
∘ la découverte (E50-E70) d'un deuxième numéro de système autonome auquel est associé le deuxième dispositif ; et

- une étape d'établissement (E90) avec le deuxième dispositif d'au moins une session selon ledit protocole de routage en utilisant les numéros de systèmes autonomes échangés lors de l'étape d'échange entre le premier et le deuxième dispositif.

## Description

### Arrière-plan de l'invention

L'invention se rapporte au domaine général des télécommunications.

Elle concerne plus particulièrement la configuration de dispositifs d'un réseau de télécommunications mettant en œuvre un protocole de routage dynamique, tel que le protocole BGP (Border Gateway Protocol), ou le protocole TRIP (Telephony Routing over IP), pour le calcul, la sélection et l'établissement de routes destinées à acheminer le trafic dans le réseau.

De tels protocoles de routage sont couramment utilisés dans les réseaux de télécommunications pour communiquer des informations de routage entre différents systèmes autonomes (ou AS pour Autonomous System en anglais). Typiquement le réseau Internet est constitué actuellement de plusieurs dizaines de milliers de systèmes autonomes, chacun étant exploité par une entité administrative spécifique, appelée opérateur ou administrateur de réseau. Chaque système autonome est identifié par un numéro globalement unique appelé numéro de système autonome ou numéro d'AS (ou encore ASN pour AS Number en anglais).

Le protocole BGP est de plus en plus utilisé aujourd'hui dans les infrastructures réseau (aussi désignées plus simplement dans la suite par « réseaux ») sur lesquelles s'appuient les centres de données (« Data Centers », ou DC en anglais), et notamment les centres de données de taille importante, aussi connus sous le nom de MSDC (Massively Scalable Data Centers) ou HSDC (Hyper-Scale Data Centers). Le protocole BGP permet au sein de ces infrastructures réseau d'échanger des informations de routage entre les différents équipements du réseau (par ex. routeurs, contrôleurs, commutateurs, etc.). L'infrastructure réseau d'un centre de données peut constituer un système autonome à part entière ou être organisée selon un ensemble de systèmes autonomes qui peuvent par exemple former une « confédération BGP » lorsque l'infrastructure est massivement distribuée. Au sein d'une telle infrastructure réseau, des numéros d'AS privés, c'est-à-dire non visibles de l'Internet, sont souvent utilisés pour faciliter la gestion de la politique de routage BGP sans devoir requérir l'attribution d'un numéro d'AS globalement unique. Ceci permet de distinguer plus facilement l'infrastructure réseau du centre de données à proprement parler, du réseau auquel cette infrastructure est connectée et auquel un numéro d'AS distinct est affecté. Au sein de l'infrastructure réseau du centre de données, un même numéro d'AS peut par exemple être utilisé par plusieurs routeurs situés sur un même niveau hiérarchique. Aussi, des extensions BGP spécifiques aux centres de données (par ex. « allowas-in ») ont été développées par certains constructeurs pour pouvoir utiliser un même numéro d'AS dans des niveaux hiérarchiques différents.

Le déploiement d'un centre de données nécessite un niveau d'automatisation des processus de production de ressources (par ex. production dynamique de machines virtuelles destinées à héberger certaines fonctions réseau virtualisées) hautement élevé, afin de simplifier les procédures de configuration des équipements de l'infrastructure réseau du centre de données et d'en minimiser les risques d'erreur. Une telle automatisation permet en outre d'améliorer la disponibilité et la stabilité du réseau : toute modification de la topologie de l'infrastructure réseau liée à l'introduction de nouvelles ressources de commutation (par ex. commutateurs, routeurs) ou de transmission (par ex. liens intra- et inter-centres de données destinés à fournir plus de capacité pour écouler plus de trafic) doit se faire d'une manière dynamique et requérant un effort de configuration minimal, voire nul.

De plus, il est important de maîtriser la volumétrie du trafic de signalisation constitué notamment des informations de configuration émises au sein de l'infrastructure réseau, typiquement par un ou plusieurs contrôleurs réseau lorsque le centre de données s'appuie sur une architecture de type Software-Defined Networking (SDN), par exemple. Ce trafic de signalisation peut également comprendre des notifications émises par certains équipements du réseau lorsqu'ils détectent une modification de sa topologie, par exemple la rupture d'une connexion entre deux commutateurs (Switch, en anglais) localisés au sein d'un même centre de données. Il est impératif de s'assurer que la volumétrie du trafic de signalisation échangé ne pénalise en aucune manière la disponibilité du ou des services qui impliquerai(en)t des ressources hébergées au sein de l'infrastructure du centre de données.

Afin d'optimiser l'exploitation des ressources au sein d'un centre de données, la configuration des équipements du réseau sous-jacent doit se conformer à des procédures adéquates de nomenclature des interfaces, des adresses allouées à ces interfaces, etc. En particulier, la mise en place d'une politique de routage au sein de l'infrastructure réseau du centre de données selon un protocole de routage tel que BGP, repose sur l'établissement de sessions BGP entre les différents équipements du réseau. L'établissement de sessions BGP entre tous les équipements d'un système autonome est impératif pour garantir une vision globale et cohérente de la topologie de l'infrastructure réseau. Ces sessions BGP sont établies sur la base de différentes informations de configuration telles que notamment le ou les numéro(s) de système autonome (ou numéro d'AS) auquel appartient chaque équipement. Le numéro d'AS est une information obligatoire pour pouvoir établir une session BGP entre deux routeurs : chacun des routeurs doit connaître non seulement son propre numéro d'AS mais également celui de l'autre routeur pour pouvoir établir une session BGP avec celui-ci. Le numéro d'AS est également utilisé pour sélectionner les routes BGP et pour la détection et la prévention de boucles de routage au sein de l'infrastructure réseau.

Le document US2017/163532 A1 décrit un système de réseau comprenant un premier ensemble de machines hôtes qui hébergent des machines virtuelles qui se connectent les unes aux autres via un réseau logique. Le système de réseau comprend un deuxième ensemble de machines hôtes pour héberger des conteneurs virtualisés qui fonctionnent comme des passerelles pour transférer des données entre les machines virtuelles et un réseau externe. Au moins l'un des conteneurs virtualisés est associé avec au moins un routeur physique dans le réseau externe afin de publier les adresses des machines virtuelles auprès du routeur physique. Le protocole BGP est utilisé par chaque machine hôte de la seconde pluralité de machines hôtes pour annoncer la passerelle hébergée sur cette machine hôte.

Dans l'état actuel de la technique, le processus de configuration des fonctions caractéristiques de l'activation d'un protocole de routage dynamique tel que BGP au sein d'une infrastructure réseau (d'un centre de données, ou de n'importe quelle autre infrastructure réseau), requiert la configuration explicite de chaque équipement du réseau par l'opérateur du réseau. Cette configuration est réalisée par exemple via la programmation par l'administrateur du réseau d'une pluralité de tâches élémentaires, au cours desquelles l'administrateur du réseau se connecte à chaque équipement du réseau afin de configurer l'ensemble des paramètres dont chaque équipement a besoin pour l'établissement de sessions BGP avec ses pairs. Comme mentionné précédemment, les pairs BGP doivent disposer de leurs propres numéros d'AS, des numéros d'AS de leurs voisins, de l'adresse ou des adresses IP de leurs voisins, ainsi que d'une instruction explicite pour activer le protocole BGP et établir des sessions BGP avec leurs voisins.

Une telle procédure de configuration est complexe et nécessite donc une intervention humaine souvent chronophage, avec des risques d'erreurs élevés qui peuvent s'avérer préjudiciables (par exemple, en pénalisant l'accès au centre de données ou à un sous-ensemble d'équipements du centre).

Le document Lindem. et al, « BGP Logical Link Discovery Protocol (LLDP) Peer Discovery », Internet Draft : Network Working Group, 2017, est également connu. Ce document décrit comment le protocole BGP peut utiliser le protocole LLDP pour découvrir les pairs directement connectés et les pairs à 2 sauts lorsque l'appairage est basé sur des adresses de loopback.

### Objet et résumé de l'invention

L'invention permet de pallier notamment à cet inconvénient en proposant un procédé d'établissement automatique par un premier dispositif de réseau d'une session conforme à un protocole de routage dynamique avec un deuxième dispositif de réseau, le premier dispositif étant associé à un premier numéro de système autonome et ne connaissant pas de numéro de système autonome associé au deuxième dispositif, ledit procédé comprenant, suite à la détection par le premier dispositif de l'existence d'une connectivité avec le deuxième dispositif :
- une étape d'échange avec le deuxième dispositif comprenant l'annonce au deuxième dispositif du premier numéro de système autonome, ladite étape d'échange comprenant en outre :
   ∘ la découverte d'un numéro de système autonome, dit deuxième numéro de système autonome, auquel est associé le deuxième dispositif ; ou
   ∘ l'allocation au deuxième dispositif d'un numéro de système autonome, dit troisième numéro de système autonome et l'annonce au deuxième dispositif du troisième numéro de système autonome qui lui a été alloué ; et
- une étape d'établissement avec le deuxième dispositif d'au moins une session selon ledit protocole de routage en utilisant les numéros de systèmes autonomes échangés entre le premier et le deuxième dispositif.

On notera que le premier dispositif et le deuxième dispositif peuvent être indifféremment des voisins directs ou des voisins distants. La détection par un premier dispositif de l'existence d'une connectivité avec un deuxième dispositif au sens de l'invention peut ainsi comprendre la détection d'un lien actif ou d'une interface active (par exemple d'une connexion physique) entre le premier et le deuxième dispositif, ou comprendre la détection de l'existence d'une route permettant au premier dispositif de joindre le deuxième dispositif (c'est-à-dire comprenant une pluralité de nœuds intermédiaires entre lesquels existent des liens actifs ou des interfaces actives pour permettre au premier dispositif de joindre le deuxième dispositif). La détection de connectivité peut être réalisée grâce à des mécanismes connus dans l'état de l'art, par exemple, le mécanisme de découverte de capacités fonctionnelles OSPF («Extensions to OSPF for Advertising Optional Router Capabilities », RFC 4970) ou DNS-SD (DNS Service Discovery).

Corrélativement, l'invention vise également un dispositif de réseau, dit premier dispositif, configuré pour établir automatiquement une session conforme à un protocole de routage dynamique avec un deuxième dispositif de réseau, le premier dispositif étant associé à un premier numéro de système autonome et ne connaissant pas de numéro de système autonome associé au deuxième dispositif, ledit premier dispositif comprenant une pluralité de modules, activés suite à la détection par le premier dispositif de l'existence d'une connectivité avec le deuxième dispositif, ladite pluralité de modules comprenant :
- un module d'échange avec le deuxième dispositif, configuré pour :
   ∘ annoncer au deuxième dispositif le premier numéro de système autonome ;
   ∘ découvrir un numéro de système autonome, dit deuxième numéro de système autonome, auquel est associé le deuxième dispositif, ou allouer au deuxième dispositif un numéro de système autonome, dit troisième numéro de système autonome et annoncer au deuxième dispositif le troisième numéro de système autonome qui lui a été alloué ; et
- un module d'établissement, configuré pour établir avec le deuxième dispositif au moins une session selon ledit protocole de routage en utilisant les numéros de systèmes autonomes échangés entre le premier et le deuxième dispositif.

L'invention concerne par ailleurs un procédé de communication avec un premier dispositif de réseau mis en œuvre par un deuxième dispositif de réseau, ledit procédé comprenant :
- une étape d'échange avec le premier dispositif comprenant :
   o la réception en provenance du premier dispositif d'un numéro de système autonome, dit premier numéro de système autonome, associé au premier dispositif ;
   o la mémorisation du premier numéro de système autonome en association avec le premier dispositif ;
   ladite étape d'échange comprenant en outre :
   ∘ la fourniture au premier dispositif d'un numéro de système autonome, dit deuxième numéro de système autonome, auquel le deuxième dispositif est associé ; ou
   ∘ la réception en provenance du premier dispositif d'un numéro de système autonome, dit troisième numéro de système autonome, alloué par le premier dispositif au deuxième dispositif et, si le deuxième dispositif n'est pas déjà associé à un numéro de système autonome, la configuration du deuxième dispositif avec le troisième numéro de système autonome ;
- une étape d'établissement avec le premier dispositif d'au moins une session selon ledit protocole de routage en utilisant les numéros de systèmes autonomes échangés entre le premier et le deuxième dispositif.

Corrélativement, l'invention vise aussi un dispositif de réseau, dit deuxième dispositif, configuré pour établir automatiquement une session conforme à un protocole de routage dynamique avec un premier dispositif de réseau, ledit deuxième dispositif comprenant :
- un module d'échange avec le premier dispositif, configuré pour :
   ∘ recevoir en provenance du premier dispositif un numéro de système autonome, dit premier numéro de système autonome, associé au premier dispositif ;
   ∘ mémoriser le premier numéro de système autonome en association avec le premier dispositif ;
   ledit module d'échange étant en outre configuré pour :
   ∘ fournir au premier dispositif un numéro de système autonome, dit deuxième numéro de système autonome, auquel le deuxième dispositif est associé ; ou
   ∘ recevoir en provenance du premier dispositif un numéro de système autonome, dit troisième numéro de système autonome, alloué par le premier dispositif au deuxième dispositif et, si le deuxième dispositif n'est pas déjà associé à un numéro de système autonome, configurer le deuxième dispositif avec le troisième numéro de système autonome ; et
- un module d'établissement, configuré pour établir avec le premier dispositif au moins une session selon ledit protocole de routage en utilisant les numéros de systèmes autonomes échangés entre le premier et le deuxième dispositif.

L'invention s'applique par exemple à un protocole de routage dynamique tel que le protocole BGP ou le protocole TRIP.

L'invention propose donc un procédé permettant d'établir de façon automatique des sessions conformes à un protocole de routage dynamique et caractéristiques de l'activation du protocole de routage dynamique dans le réseau entre différents dispositifs de réseau, dès lors qu'une connectivité (une connexion physique, par exemple) entre ces dispositifs est détectée. Aucune limitation n'est attachée à la nature des dispositifs de réseau considérés : il s'agit d'éléments de réseau quelconques, comme par exemple des routeurs, des commutateurs, etc.

Contrairement à l'état de la technique, grâce à l'invention, il n'est plus nécessaire que l'administrateur du réseau procède à la configuration manuelle systématique et complète de tous les dispositifs du réseau avec leurs numéros d'AS et avec celui de leurs voisins, ni avec des instructions explicites d'établissement de sessions, pour que des sessions selon le protocole de routage dynamique soient établies en vue de l'activation du protocole de routage dans le réseau. L'invention propose en effet un mécanisme d'annonce et de découverte automatiques des paramètres nécessaires à l'établissement des sessions selon le protocole de routage dynamique qui permet d'automatiser ensuite l'établissement de ces sessions. L'établissement de la session peut être indifféremment à l'initiative du premier dispositif ou du deuxième dispositif.

Dès lors qu'un dispositif du réseau (premier dispositif au sens de l'invention) a été configuré avec son numéro d'AS, il est en mesure conformément à l'invention, lorsqu'il détecte une connectivité (par exemple, une connexion physique) avec un autre dispositif du réseau (deuxième dispositif au sens de l'invention), d'établir une session avec cet autre dispositif. On note qu'aucune limitation n'est attachée à la façon dont le premier dispositif a été configuré préalablement avec le numéro d'AS qui lui est associé. Il peut s'agir d'une configuration manuelle effectuée par l'administrateur ou l'opérateur du réseau, ou d'un numéro d'AS qui lui a été alloué ou simplement communiqué par un autre dispositif du réseau comme par exemple un contrôleur du réseau, etc.

Plusieurs cas de figure sont envisagés par l'invention :
- le premier et le deuxième dispositif sont configurés (par exemple manuellement par l'administrateur du réseau ou par tout autre moyen) uniquement avec leurs propres numéros d'AS : le premier dispositif annonce alors son numéro d'AS au deuxième dispositif et découvre automatiquement le numéro d'AS du deuxième dispositif (deuxième numéro d'AS au sens de l'invention), via un message de découverte envoyé au deuxième dispositif ou via un message d'annonce reçu du deuxième dispositif. Une fois les numéros d'AS échangés entre le premier et le deuxième dispositif, une session selon le protocole de routage dynamique est automatiquement établie en utilisant ces numéros d'AS ;
- le premier dispositif est configuré avec son numéro d'AS et une plage de valeurs parmi laquelle il peut sélectionner un numéro d'AS pour le deuxième dispositif : le premier dispositif annonce alors son numéro d'AS au deuxième dispositif et alloue à celui-ci un numéro d'AS (troisième numéro d'AS au sens de l'invention). Il annonce le numéro d'AS alloué au deuxième dispositif via un message envoyé à celui-ci qui se configure ensuite avec le numéro d'AS qui lui a été alloué par le premier dispositif s'il n'en dispose pas déjà d'un. Le deuxième dispositif est dès lors associé au troisième numéro d'AS. Une session selon le protocole de routage dynamique est ensuite automatiquement établie en utilisant les numéros d'AS échangés entre les deux dispositifs.

Dans un mode particulier de réalisation, l'étape d'échange du procédé d'établissement automatique comprend en outre, suite à l'allocation du troisième numéro de système autonome au deuxième dispositif :
- la réception d'une réponse du deuxième dispositif refusant le troisième numéro de système autonome qui lui a été alloué par le premier dispositif et comprenant un quatrième numéro de système autonome auquel le deuxième dispositif est déjà associé ; et
- la mémorisation du quatrième numéro de système autonome en association avec le deuxième dispositif en remplacement du troisième numéro de système autonome.

De façon similaire, si le deuxième dispositif est déjà associé à un numéro de système autonome, dit quatrième numéro de système autonome, l'étape d'échange du procédé de communication selon l'invention comprend, dans ce mode de réalisation, le rejet du troisième numéro de système autonome alloué par le premier dispositif et la fourniture au premier dispositif du quatrième numéro de système autonome auquel le deuxième dispositif est associé.

Corrélativement, le module d'échange du deuxième dispositif est configuré pour, si le deuxième dispositif est déjà associé à un numéro de système autonome, dit quatrième numéro de système autonome, rejeter le troisième numéro de système autonome alloué par le premier dispositif et fournir au premier dispositif le quatrième numéro de système autonome auquel le deuxième dispositif est associé.

L'invention permet avantageusement de gérer, dans ce mode de réalisation, le cas où le deuxième dispositif dispose déjà d'un numéro d'AS avec lequel il a été préalablement configuré (quatrième numéro de système autonome au sens de l'invention) lorsqu'il reçoit un numéro d'AS alloué par le premier dispositif. Dans ce mode de réalisation, le deuxième dispositif conserve le numéro d'AS qui lui a été préalablement attribué et refuse le nouveau numéro d'AS alloué par le premier dispositif afin de limiter l'impact sur les autres dispositifs du réseau et le cas échéant sur les sessions déjà établies entre le deuxième dispositif et d'autres dispositifs du réseau.

On note que, comme pour le premier dispositif, aucune limitation n'est attachée à la façon dont le deuxième dispositif a été configuré préalablement avec le quatrième numéro d'AS. Il peut s'agir d'une configuration manuelle effectuée par l'opérateur du réseau, ou d'un numéro d'AS qui lui a été alloué par un autre dispositif du réseau que le premier dispositif, ou communiqué via un contrôleur, etc.

Dans un autre mode de réalisation, pour éviter une telle situation, on peut envisager que le premier dispositif détecte, préalablement à l'allocation d'un numéro de système autonome au deuxième dispositif, si le deuxième dispositif est déjà associé à un numéro de système autonome, par exemple en lui envoyant un message de découverte du numéro de système autonome associé au deuxième dispositif.

De manière générale, l'invention permet d'améliorer le niveau d'automatisation de la procédure de configuration des dispositifs d'un réseau et notamment d'établissement de sessions entre ces dispositifs pour l'activation du protocole de routage dynamique dans le réseau. Ce niveau d'automatisation répond de manière privilégiée, mais non limitative, aux exigences des centres de données de taille importante tels que les centres de données MSDC ou HSDC évoqués précédemment, et permet une simplification des opérations au sein des infrastructures réseau sous-jacentes. L'invention permet également de minimiser les risques d'erreur auxquels sont typiquement exposées des procédures de configuration exécutées manuellement par un administrateur du réseau, et de réduire les coûts d'exploitation liés à la configuration du réseau.

L'invention offre en outre la possibilité de prendre en compte aisément une évolution de la topologie du réseau, et notamment l'ajout de dispositifs dans le réseau. Ces dispositifs n'ont pas besoin d'être configurés préalablement et statiquement avec un numéro d'AS ni avec le numéro d'AS de leurs voisins dans le réseau pour être en mesure d'établir des sessions selon le protocole de routage dynamique avec ces voisins. La configuration peut être réalisée de façon dynamique grâce à l'invention, tout en limitant par ailleurs la volumétrie du trafic de signalisation nécessaire à cette configuration.

On note une grande flexibilité de mise en œuvre de l'invention qui peut s'adapter à différentes politiques de routages, à différents types de réseaux, à différentes topologies de réseaux (par exemple, à une organisation en clusters, en niveaux hiérarchiques, etc.) et à différentes configurations de réseaux (par exemple, à une configuration selon laquelle on utilise des numéros d'AS privés, à une configuration selon laquelle on alloue des numéros d'AS distincts à des niveaux hiérarchiques ou à des clusters distincts, etc.).

Dans un mode particulier de réalisation de l'invention, le procédé d'établissement automatique comprend en outre une étape d'envoi par le premier dispositif au deuxième dispositif d'une plage de numéros de systèmes autonomes dans laquelle le deuxième dispositif peut puiser pour allouer un numéro de système autonome à au moins un troisième dispositif (par exemple, un dispositif avec lequel le deuxième dispositif a établi une connexion physique).

De cette sorte, si le deuxième dispositif détecte un troisième dispositif de réseau, il peut à son tour lui allouer un numéro d'AS pour pouvoir établir automatiquement une session selon le protocole de routage dynamique considéré avec ce troisième dispositif, en particulier si celui-ci ne dispose pas déjà de numéro d'AS préconfiguré.

Grâce à l'échange de numéros d'AS prévu entre le premier et le deuxième dispositif, l'invention peut s'appliquer à différents protocoles de routage dynamique, et a notamment une application privilégiée dans le cas des protocoles de routage dynamique BGP (Border Gateway Protocol) et TRIP (Telephony Routing over IP), pour lesquels le numéro d'AS est une information essentielle pour l'établissement de sessions.

On note que lorsque le protocole de routage est le protocole TRIP, l'étape d'échange comprend en outre préférentiellement :
- l'annonce d'un premier identifiant de domaine administratif de téléphonie sur IP associé au premier dispositif ; et
- la découverte d'un deuxième identifiant de domaine administratif de téléphonie sur IP associé au deuxième dispositif, ou l'allocation et l'échange d'un troisième identifiant de domaine administratif de téléphonie sur IP au deuxième dispositif.

Ce mode de réalisation permet de s'adapter aux spécificités du protocole TRIP qui, pour l'établissement de sessions TRIP entre deux dispositifs, s'appuie, outre les numéros d'AS associés à ces dispositifs, sur des identifiants de domaine administratif de téléphonie sur IP (aussi désigné par ITAD pour IP Telephony Administrative Domain) associés à ces dispositifs.

Dans un mode particulier de réalisation, lorsque le protocole de routage est le protocole BGP, les annonces au deuxième dispositif du premier et le cas échéant, du troisième numéro de système autonome peuvent être effectuées au moyen d'un message d'établissement de session BGP OPEN envoyé par le premier dispositif au deuxième dispositif.

Dans ce mode de réalisation, l'établissement de la session est à l'initiative du premier dispositif, et est demandé en même temps que le premier dispositif annonce au deuxième dispositif son numéro d'AS et éventuellement un numéro d'AS qu'il a alloué au deuxième dispositif. Ce mode de réalisation propose avantageusement d'exploiter un message existant (message d'établissement de session BGP OPEN) déjà décrit dans la spécification du protocole de routage BGP (RFC 4271) et de minimiser le nombre de messages échangés entre les deux dispositifs. On note qu'aucune limitation n'est attachée à la façon dont ledit message d'établissement de session est modifié pour véhiculer le troisième numéro de système autonome le cas échéant. Cela peut se faire, par exemple, via l'ajout d'une option dans le message ou d'un nouveau champ comprenant le troisième numéro d'AS alloué au deuxième dispositif.

D'autres types de message peuvent être utilisés en variante. Par exemple, dans un autre mode de réalisation, les annonces du premier et du troisième numéro de système autonome et/ou la découverte du deuxième numéro de système autonome sont effectuées au moyen de messages d'annonce de routeur et/ou de messages de sollicitation de routeur.

Cet autre mode de réalisation permet ainsi d'exploiter des messages (i.e. messages RA (Router Advertisement) et RS (Router Solicitation)) de l'art antérieur décrits dans la spécification du protocole « Neighbor Discovery for Internet Protocol version 6 » (RFC 4861). On note qu'un même message (par ex., un message RS) peut être utilisé à la fois pour annoncer un numéro de système autonome et pour découvrir un autre numéro de système autonome. En variante, de nouveaux messages peuvent être définis pour véhiculer les informations échangées conformément à l'invention entre le premier et le deuxième dispositif.

Il en est de même pour les autres protocoles de routage auxquels s'applique l'invention : des messages déjà définis par le protocole peuvent être utilisés (moyennant la modification de ces messages pour véhiculer les informations échangées entre les deux dispositifs), ou de nouveaux messages peuvent être définis.

Dans un mode particulier de réalisation, les différentes étapes du procédé d'établissement automatique et/ou les différentes étapes du procédé de communication selon l'invention sont déterminées par des instructions de programmes d'ordinateurs.

En conséquence, l'invention vise aussi un programme d'ordinateur sur un support d'informations, ce programme étant susceptible d'être mis en œuvre dans un dispositif de réseau ou plus généralement dans un ordinateur, ce programme comportant des instructions adaptées à la mise en œuvre des étapes d'un procédé d'établissement automatique tel que décrit ci-dessus.

L'invention vise également un programme d'ordinateur sur un support d'informations, ce programme étant susceptible d'être mis en œuvre dans un dispositif de réseau ou plus généralement dans un ordinateur, ce programme comportant des instructions adaptées à la mise en œuvre des étapes d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communication comprenant au moins un premier dispositif de réseau selon l'invention et au moins un deuxième dispositif de réseau selon l'invention, configurés pour établir automatiquement entre eux une session conforme à un protocole de routage dynamique.

Le système selon l'invention bénéficie des mêmes avantages cités précédemment que les procédés d'établissement et de communication.

On peut également envisager, dans d'autres modes de réalisation, que le procédé d'établissement, le procédé de communication, le premier dispositif de réseau, le deuxième dispositif de réseau et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention dans un mode particulier de réalisation ;
- la figure 2 illustre un dispositif de réseau du système de communication de la figure 1, conforme à l'invention dans un mode particulier de réalisation ;
- la figure 3 représente l'architecture matérielle du dispositif de réseau de la figure 2, dans un mode particulier de réalisation ;
- les figures 4 à 6illustrent les principales étapes des procédés d'établissement automatique et de communication mis en œuvre par les dispositifs de communication du système de la figure 1, dans différents modes de réalisation
- ; et
- les figures 7 et 8 illustrent des exemples d'application de l'invention.

### Description détaillée de l'invention

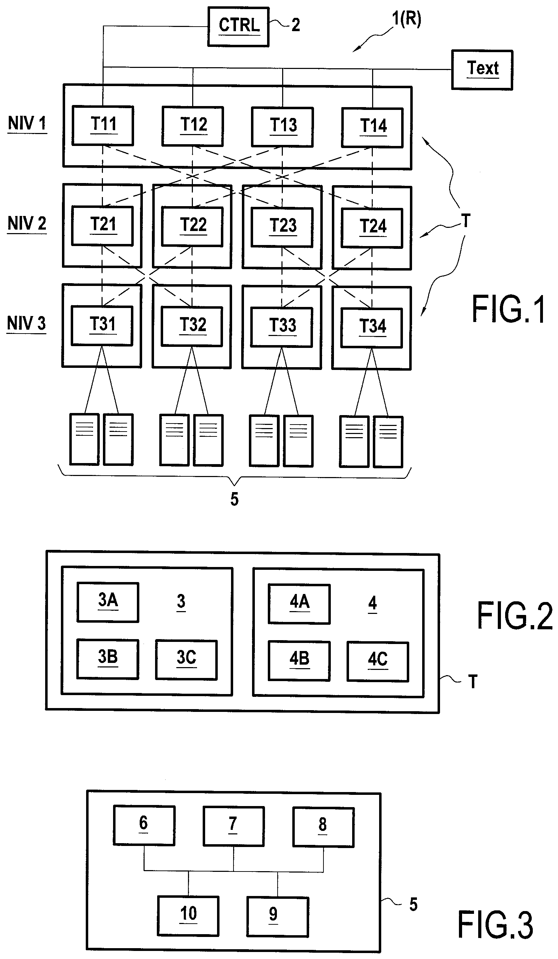

La **figure 1** représente, dans son environnement, un système de communication 1 conforme à l'invention, dans un mode particulier de réalisation.

Ce mode de réalisation comprend la détection d'un nœud voisin « directement connecté », c'est-à-dire connecté physiquement (lien actif ou interface active). En variante, on pourrait tout aussi bien considérer des nœuds non directement connectés (c'est-à-dire des nœuds distants) ; dans ce cas, la fonction « multi-hop BGP » (RFC 4271) est de préférence activée par les nœuds BGP.

Dans l'exemple envisagé à la figure 1, le système de communication 1 comprend une pluralité de dispositifs de réseau (référencés au moyen de la lettre T, éventuellement suivie d'un complément (ex. T11 ou T ou encore T')) appartenant à l'infrastructure réseau d'un centre de données (DC). Les dispositifs T sont reliés entre eux via une ou plusieurs interfaces de communication (illustrée(s) sur la figure en traits discontinus) et forment un réseau de communication R.

Aucune limitation n'est attachée à la nature des dispositifs de réseau T (aussi appelés nœuds du réseau R) : il s'agit d'éléments de réseau quelconques, comme par exemple des routeurs, des commutateurs, etc. Aucune limitation n'est attachée non plus à la nature des interfaces de communication utilisées par les dispositifs T pour communiquer entre eux au sein du réseau R. Il peut s'agir d'interfaces de communication filaires ou sans fil, mobiles ou fixes, etc.

Le réseau de communication R formé par les dispositifs T utilise un protocole de routage dynamique. L'invention permet un établissement automatique de sessions conformes à ce protocole de routage entre différents dispositifs de réseau T en vue d'activer l'utilisation du protocole de routage dynamique dans le réseau R. Dans le mode de réalisation décrit ici, le protocole de routage dynamique considéré est le protocole BGP.

Comme mentionné précédemment, conformément au protocole BGP, pour établir des sessions avec leurs voisins dans le réseau R (c'est-à-dire avec les dispositifs du réseau R avec lesquels ils disposent d'une connexion physique établie), les différents dispositifs du réseau R doivent connaître le ou les numéro(s) de système autonome qui leur est(sont) associé(s) (c'est-à-dire auquel ils sont rattachés), ainsi que les numéros de systèmes autonomes associés à leurs voisins. L'invention permet un échange automatique de ces numéros d'AS entre deux dispositifs voisins sans nécessiter comme dans l'état de la technique une configuration statique (par ex., « manuelle ») préalable de ces dispositifs avec chacune de ces informations (c'est-à-dire numéro d'AS du dispositif considéré et numéros d'AS de ses voisins). L'invention permet en effet une configuration dynamique des dispositifs du réseau avec ces informations dès lors qu'au moins un dispositif du réseau R est configuré avec son propre numéro d'AS et/ou dispose d'une plage de valeurs dans laquelle peuvent être alloués les numéros d'AS de ses voisins, comme détaillé davantage ultérieurement. Cette plage peut être contiguë ou non-contiguë.

L'infrastructure réseau sur laquelle s'appuie le centre de données implémente ici une architecture SDN. Cette hypothèse n'est toutefois pas un prérequis pour mettre en œuvre l'invention.

L'infrastructure réseau SDN comprend, outre les dispositifs de réseau T, un contrôleur 2 permettant une exploitation cohérente et déterministe du réseau R du centre de données. Le contrôleur 2 a, de façon connue, une vision globale et systémique du réseau R, de sa topologie, de ses composantes, des fonctions réseau (virtualisées ou non) disponibles, de leur statut, etc. Ce contrôleur 2 est capable de définir une politique de routage au sein du réseau R, s'appuyant sur le protocole BGP, et permettant d'acheminer le trafic du centre de données de façon conforme aux objectifs fixés par l'opérateur du centre de données. Il est, dans l'exemple illustré à la figure 1, relié à l'un des dispositifs de réseau T, à savoir au dispositif T11.

Dans l'exemple illustré à la figure 1, le système de communication 1 est organisé en une pluralité de niveaux hiérarchiques (trois sur la figure 1 référencés par NIV1, NIV2 et NIV3), chaque niveau hiérarchique étant lui-même organisé en un ou plusieurs clusters (c.-à-d. groupes) de dispositifs : un cluster pour le niveau hiérarchique NIV1 comprenant quatre dispositifs T11, T12, T13 et T14, quatre clusters pour le niveau hiérarchique NIV2 comprenant chacun respectivement un dispositif T21, T22, T23 et T24, et quatre clusters distincts également pour le niveau hiérarchique NIV3 comprenant chacun respectivement les quatre dispositifs T31, T32, T33 et T34. Les dispositifs de réseau du dernier niveau hiérarchique NIV3 sont reliés ici aux différentes machines virtuelles ou matérielles (par ex. serveurs) du centre de données (globalement référencées par S).

Bien entendu, cette architecture d'infrastructure réseau et son organisation en niveaux hiérarchiques et en clusters (comprenant un ou plusieurs dispositifs) n'est donnée qu'à titre illustratif, et l'invention s'applique à d'autres types d'architectures (ayant une unité centrale telle que le contrôleur 2 ou non). Le choix de l'architecture du réseau R relève de l'ingénierie du réseau, de sa topologie, de la taille du centre de données, etc.

Comme mentionné précédemment, l'utilisation du protocole de routage dynamique BGP au sein du réseau R formé par les dispositifs T requiert l'allocation de numéros de systèmes autonomes à chacun de ces dispositifs. Dans l'exemple envisagé à la figure 1, les choix suivants sont faits par l'opérateur du centre de données pour cette allocation :
- utilisation de numéros d'AS privés (par exemple, appartenant à la plage 64512-65524 ou à la plage de valeurs 4200000000-4294967294 pour le cas des numéros d'AS codés sur 4 octets) ; et
- utilisation d'un même numéro d'AS pour les dispositifs de réseau situés à un même niveau hiérarchique et appartenant à un même cluster.

Cette politique d'allocation des numéros d'AS n'est donnée qu'à titre illustratif. D'autres politiques peuvent être retenues par l'opérateur du centre de données (par exemple, allocation d'un même numéro d'AS pour l'ensemble des dispositifs appartenant à un même niveau hiérarchique, ou d'un même numéro d'AS pour l'ensemble des dispositifs du réseau, des numéros d'AS distincts par famille d'adresses ; etc.).

Dans le mode de réalisation décrit ici, les dispositifs T du réseau R sont tous conformes à l'invention : comme illustré à la **figure 2****,** chaque dispositif T du réseau est équipé ici à la fois de moyens 3 lui permettant d'établir des sessions BGP de façon automatique avec ses voisins (c'est-à-dire avec les autres dispositifs du réseau R avec lesquels il a une connexion physique établie, c'est-à-dire active) conformément à l'invention et d'agir comme un premier dispositif au sens de l'invention vis-à-vis de ceux-ci, et de moyens 4 lui permettant de communiquer avec ses voisins conformément à l'invention et d'agir comme un deuxième dispositif au sens de l'invention à l'égard de ceux-ci. Toutefois les moyens 3 et 4 ne sont pas nécessairement activés simultanément, en fonction de la configuration du dispositif T. Ainsi par exemple, si le dispositif T n'est pas associé à un numéro d'AS avec lequel il a été préalablement configuré (ce numéro d'AS étant stocké en tant que tel dans l'une de ses mémoires, par exemple dans une mémoire non volatile), les moyens 3 sont désactivés tandis que ses moyens 4 peuvent être activés. Inversement, dès lors qu'un dispositif T est configuré avec un numéro d'AS qui lui est associé, ses moyens 3 peuvent être activés (à la place des moyens 4 ou simultanément aux moyens 4).

Ces hypothèses ne sont pas limitatives. En variante on peut envisager de configurer certains dispositifs du réseau R de sorte à remplir uniquement les fonctions d'un premier dispositif au sens de l'invention (autrement dit, ces dispositifs ne sont équipés que des moyens 3). Ceci peut être le cas par exemple des dispositifs appartenant aux niveaux hiérarchiques ayant les indices les plus faibles (par exemple au niveau NIV1). On peut également envisager de configurer certains dispositifs du réseau R (par exemple les dispositifs appartenant au niveau hiérarchique ayant l'indice le plus élevé, tel qu'au niveau NIV3 sur la figure 1) de sorte à remplir uniquement les fonctions d'un second dispositif au sens de l'invention (autrement dit, ces dispositifs ne sont équipés que des moyens 4).

Dans le mode de réalisation décrit ici, les dispositifs T du réseau R conformes à l'invention ont l'architecture matérielle d'un ordinateur 5 telle qu'illustrée à la **figure 3****.** Ils comprennent notamment un processeur 6, une mémoire vive 7, une mémoire morte 8, une mémoire flash non volatile 9, ainsi que des moyens de communication 10 comprenant une ou plusieurs interfaces de communication.

Les moyens de communication 10 permettent à chaque dispositif T d'être relié à un ou plusieurs autres dispositifs T du réseau R, et de communiquer avec ces autres dispositifs notamment pour le routage et l'acheminement du trafic au sein du réseau, en utilisant le protocole BGP. A cet effet, les dispositifs T sont configurés ici pour écouter par défaut sur le port TCP 179, en vue de recevoir les messages relatifs au protocole BGP. Afin de différencier la procédure d'établissement automatique des sessions BGP de celle définie par la norme actuelle, d'autres numéros de port peuvent être utilisés si les dispositifs T ont été instruits à cet effet au préalable.

La mémoire morte 8 de chaque dispositif de réseau T constitue un support d'enregistrement conforme à l'invention, lisible par le processeur 6 et sur lequel sont enregistrés des programmes d'ordinateur PROG3 et PROG4 conformes à l'invention : le programme PROG3 comporte des instructions pour l'exécution des étapes du procédé d'établissement automatique selon l'invention, tandis que le programme PROG4 comporte des instructions pour l'exécution des étapes du procédé de communication selon l'invention.

Plus particulièrement, le programme d'ordinateur PROG3 définit des modules fonctionnels (et logiciels ici) des moyens 3 du dispositif T, qui sont configurés pour mettre en œuvre les étapes du procédé d'établissement automatique d'une session BGP selon l'invention avec un autre dispositif du réseau R désigné ici par T', lorsque les moyens 3 du dispositif T sont activés. On suppose ici que les moyens 3 du dispositif T ne sont activés pour établir une session BGP avec le dispositif T' que lorsque le dispositif T est déjà configuré avec un numéro de système autonome qui lui est associé (i.e., auquel il est rattaché) ; le dispositif T ignore en revanche, avant de mettre en œuvre le procédé d'établissement automatique, tout numéro de système autonome associé au dispositif T' (autrement dit, le dispositif T ne connaît pas de numéro de système autonome associé au dispositif T', c'est-à-dire encore qu'il n'a été configuré avec aucun numéro de système autonome associé au dispositif T').

Les modules fonctionnels définis par le programme PROG3 s'appuient sur et/ou commandent les éléments matériels 6-10 de l'ordinateur 5 cités précédemment, et comprennent notamment ici, comme illustré sur la figure 2 :
- un module de détection 3A configuré pour détecter l'établissement ou l'existence d'une connexion physique avec le dispositif T' ;
- un module d'échange 3B, configuré pour :
   ∘ annoncer au dispositif T' de réseau le numéro de système autonome (premier numéro de système autonome au sens de l'invention) avec lequel le dispositif T est le cas échéant configuré et qui lui est associé ;
   ∘ découvrir un numéro de système autonome (deuxième numéro de système autonome au sens de l'invention), auquel est associé le cas échéant le dispositif T' ou allouer au dispositif T' un numéro de système autonome (troisième numéro de système autonome), et annoncer au dispositif T' le numéro de système autonome qui lui a été alloué ;
- et un module d'établissement 3C, configuré pour établir avec le dispositif T' une session selon le protocole de routage BGP en utilisant les numéros de systèmes autonomes associés aux dispositifs T et T'.

Le programme d'ordinateur PROG4 définit des modules fonctionnels (et logiciels ici) des moyens 4 du dispositif T de réseau, définis pour mettre en œuvre les étapes du procédé de communication selon l'invention avec un autre dispositif désigné par T" du réseau R, lorsque les moyens 4 du dispositif T sont activés. Les moyens 4 du dispositif T peuvent être activés que celui-ci ait été ou non préalablement configuré avec un numéro de système autonome auquel il est rattaché. On suppose ici que le dispositif T ne connaît pas (autrement dit, ignore) le numéro de système autonome éventuellement associé au dispositif T" (i.e., il n'a pas été configuré préalablement à la mise en œuvre du procédé de communication avec le numéro de système autonome associé au dispositif T").

Les modules fonctionnels définis par le programme PROG4 s'appuient sur et/ou commandent les éléments matériels 6-10 de l'ordinateur 5 cités précédemment, et comprennent notamment ici, comme illustré sur la figure 2 :
- un module de détection 4A configuré pour détecter l'établissement ou l'existence d'une connexion physique avec le dispositif T (ce module de détection pouvant être une même fonction partagée le cas échéant avec le module de détection 3A défini par le programme PROG3) ;
- un module d'échange 4B configuré pour :
   ∘ recevoir un message d'annonce en provenance du dispositif T" comprenant un numéro de système autonome (premier numéro de système autonome au sens de l'invention) associé au dispositif T" ;
   ∘ mémoriser ce numéro de système autonome en association avec le dispositif T" ;
   le module d'échange 4B étant en outre configuré pour :
   ∘ recevoir un message de sollicitation du dispositif T" invitant le dispositif T à lui fournir un numéro de système autonome (deuxième numéro de système autonome au sens de l'invention), auquel est associé le cas échéant le dispositif T et fournir au dispositif T", le numéro de système autonome auquel le dispositif T est associé ; ou
   ∘ recevoir un message d'annonce en provenance du dispositif T" comprenant un numéro de système autonome (troisième numéro de système autonome au sens de l'invention), alloué par le dispositif T" au dispositif T et :
      ▪ si le dispositif T n'est pas déjà associé à un numéro de système autonome, configurer le dispositif T avec ce numéro de système autonome alloué par le dispositif T" ;
      ▪ si le dispositif T est en revanche déjà associé à un numéro de système autonome, rejeter le numéro de système autonome alloué par le dispositif T" et fournir au dispositif T" le numéro de système autonome auquel le dispositif T est déjà associé ;
- et un module d'établissement 4C, configuré pour établir avec le dispositif T" une session selon le protocole de routage BGP en utilisant les numéros de systèmes autonomes associés aux dispositifs T et T".

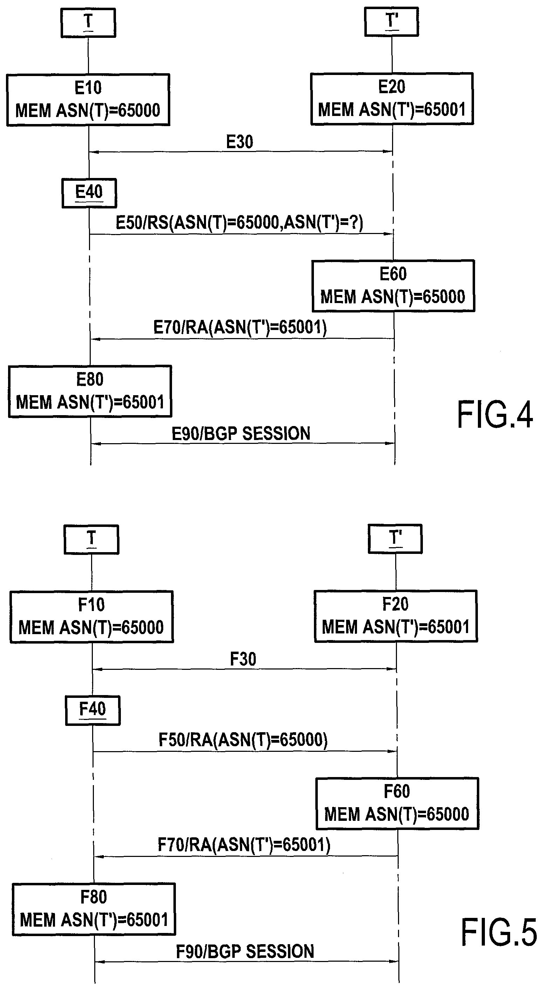

Les figures 4 à 6 illustrent les principales étapes des procédés d'établissement automatique et de communication mises en œuvre respectivement par les moyens 3 et 4 des dispositifs T du réseau R dans différents modes de réalisation et différents contextes.

Plus spécifiquement, la **figure 4** illustre un premier mode de réalisation dans lequel un dispositif T du réseau R est configuré avec un numéro de système autonome privé auquel il est associé (noté ASN(T) avec par exemple ASN(T)=65500) (étape E10). On suppose dans l'exemple illustré à la figure 4 que le dispositif T n'est configuré qu'avec son numéro de système autonome et ne connaît pas les numéros de systèmes autonomes éventuellement associés aux autres dispositifs du réseau R. Le dispositif T est par exemple ici le dispositif T11 appartenant au niveau hiérarchique NIV1 du réseau R illustré à la figure 1. Les moyens 3 du dispositif T sont supposés activés. L'invention n'impose aucune chronologie concernant les étapes E50 et E70.

Aucune limitation n'est attachée à la façon dont la configuration du dispositif T avec le numéro de système autonome ASN(T) a été réalisée. Par exemple, cette configuration a pu être réalisée par l'administrateur du réseau R en se connectant sur celui-ci via une session Telnet, ou en utilisant un protocole tel que NETCONF. En variante, cette configuration a pu être réalisée via le contrôleur 2. Le numéro de système autonome ASN(T) est stocké dans la mémoire non volatile 7 du dispositif T.

Dans l'exemple illustré à la figure 4, on considère par ailleurs un dispositif T' du réseau R, configuré avec un numéro de système autonome privé noté ASN(T') auquel il est associé. Par exemple ASN(T')=65001 (étape E20). On suppose dans l'exemple illustré à la figure 4 que le dispositif T' n'est configuré qu'avec son propre numéro de système autonome ASN(T') et ne connaît pas les éventuels numéros de systèmes autonomes associés aux autres dispositifs du réseau R, et en particulier celui associé au dispositif T. Le dispositif T' est par exemple ici le dispositif T21 appartenant au niveau hiérarchique NIV2 du réseau R illustré à la figure 1. Les moyens 4 du dispositif T' sont supposés activés. On suppose ici par souci de simplification que les moyens 3 du dispositif T' sont désactivés.

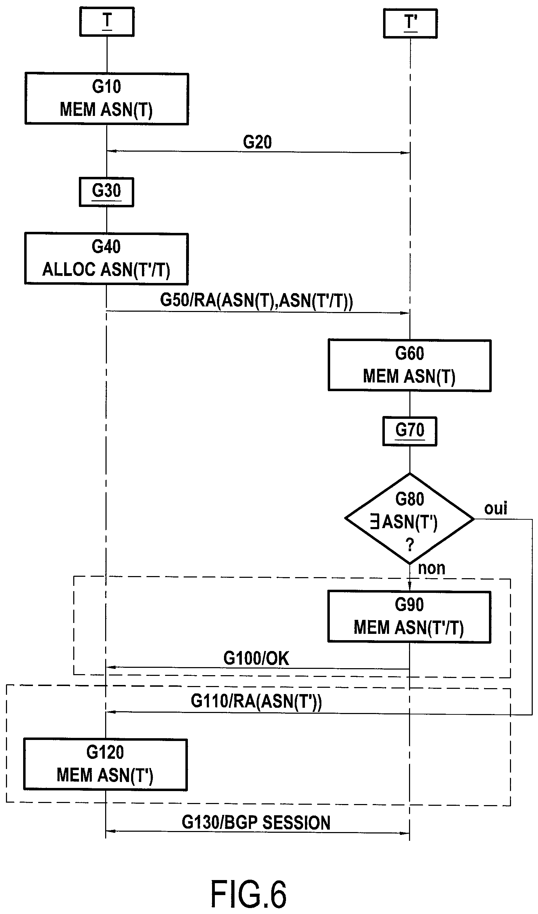

Comme pour le dispositif T, aucune limitation n'est attachée à la façon dont la configuration du dispositif T' avec le numéro de système autonome ASN(T') a été réalisée. Cette configuration a pu être réalisée par l'administrateur du réseau R en se connectant sur celui-ci via une session Telnet, ou en utilisant un protocole tel que NETCONF. En variante, cette configuration a pu être réalisée via le contrôleur 2 ou par l'intermédiaire d'un autre dispositif du réseau, par exemple par un dispositif du niveau hiérarchique NIV1 tel que le dispositif T12, T13 ou T14 (comme détaillé davantage ultérieurement en référence à la figure 6). Le numéro de système autonome ASN(T') est stocké dans la mémoire non volatile 7 du dispositif T'.

On suppose maintenant qu'une connexion physique est établie entre le dispositif T et le dispositif T', via leurs moyens de communication 10 respectifs (étape E30). Une telle connexion physique peut être établie par exemple au moyen des adresses lien-local (ou « link-local » en anglais) des dispositifs T et T'. Ces adresses lien-local sont, de façon connue en soi, configurées automatiquement sur un dispositif de réseau lors de l'initialisation de ses interfaces de communication ; elles permettent à deux dispositifs de réseau voisins de communiquer via lesdites interfaces de communication, et sont échangées entre ces deux dispositifs voisins, par exemple via un protocole de découverte de voisins.

L'établissement de la connexion physique entre le dispositif T et le dispositif T' est détectée par le module de détection 3A du dispositif T (étape E40).

Cela déclenche un échange avec le dispositif T' initialisé par le module 3B du dispositif T.

Plus spécifiquement, lors de cet échange, le dispositif T, via son module 3B, annonce au dispositif T' le numéro de système autonome ASN(T) qui lui est associé (étape E50). Dans l'exemple illustré à la figure 4, cette annonce est réalisée via l'envoi par le module 3B du dispositif T (et par l'intermédiaire des moyens de communication 10 du dispositif T et la connexion physique établie avec le dispositif T') d'un message de sollicitation de routeur RS au dispositif T'. Ce message RS comprend, dans un champ ou dans une option du message, le numéro de système autonome ASN(T).

En outre, par le biais de ce même message de sollicitation RS, le module 3B du dispositif T sollicite le dispositif T', dans un champ ou une option du message prévu(e) à cet effet, pour qu'il lui fournisse le numéro de système autonome ASN(T') qui lui est attribué (découverte du numéro de système autonome associé au dispositif T' au sens de l'invention).

Autrement dit, le même message de sollicitation RS est utilisé à la fois ici pour l'annonce du numéro de système autonome associé au dispositif T et pour la découverte du numéro de système autonome associé au dispositif T'. Ceci permet de limiter la signalisation échangée entre les dispositifs T et T'. En variante, des messages distincts peuvent être utilisés ; par exemple, l'annonce du numéro de système autonome ASN(T) peut être réalisée au moyen d'un message d'annonce de routeur RA et la découverte du numéro de système autonome ASN(T') peut être réalisée au moyen d'un message de sollicitation de routeur RS.

Sur réception du message RS envoyé par le dispositif T, le module 4B du dispositif T' extrait le numéro de système autonome ASN(T) associé au dispositif T et le mémorise, par exemple dans sa mémoire non volatile 7, en association avec le dispositif T (étape E60).

Puis il répond au dispositif T en lui fournissant (annonçant) le numéro de système autonome ASN(T') qui lui est associé (étape E70). Dans l'exemple illustré à la figure 4, le numéro de système autonome ASN(T') est fourni au dispositif T dans un message d'annonce RA, dans un champ ou une option de ce message.

Sur réception du message RA envoyé par le dispositif T', le module 3B du dispositif T extrait le numéro de système autonome ASN(T') associé au dispositif T' et le mémorise, par exemple dans sa mémoire non volatile 7, en association avec le dispositif T' (étape E80).

Une fois l'échange des numéros de systèmes autonomes terminé entre les dispositifs T et T', une session BGP est automatiquement établie entre ces deux dispositifs, de façon connue en soi (étape E90). Cette session BGP peut être établie indifféremment à l'initiative du dispositif T via son module d'établissement 3C, ou à l'initiative du dispositif T' via son module d'établissement 4C, par exemple en envoyant un message BGP OPEN tel que prévu par le protocole BGP.

On note que dans cet exemple, l'échange des numéros de systèmes autonomes a été initialisé par le dispositif T via ses moyens 3. En variante, on peut envisager que le dispositif T' ait également ses moyens 3 activés et soit à l'origine de cet échange.

La **figure 5** illustre un deuxième mode de réalisation de l'invention. Dans ce deuxième mode de réalisation de l'invention, les dispositifs T et T' sont configurés comme dans l'exemple de la figure 4, chacun avec le numéro de système autonome auquel ils sont associés (respectivement ASN(T)=65500 (étape F10) et ASN(T')=65501 (étape F20)). On suppose dans l'exemple illustré à la figure 5 que le dispositif T ne connaît pas le numéro de système autonome éventuellement associé au dispositif T' et inversement.

Par souci de simplification, on suppose ici que seuls les moyens 3 du dispositif T sont activés et seuls les moyens 4 du dispositif T' sont activés.

On suppose qu'une connexion physique est établie entre le dispositif T et le dispositif T', via leurs moyens de communication 10 respectifs de façon identique à ce qui a été décrit à l'étape E30 dans le premier mode de réalisation (étape F30).

L'établissement de la connexion physique entre le dispositif T et le dispositif T' est détectée par le module de détection 3A du dispositif T (étape F40).

Cela déclenche un échange avec le dispositif T' initialisé ici par le module 3B du dispositif T.

Plus spécifiquement, lors de cet échange, le dispositif T, via son module 3B, annonce au dispositif T' le numéro de système autonome ASN(T) qui lui est associé (étape F50). Dans l'exemple illustré à la figure 4, cette annonce est réalisée via l'envoi par le module 3B du dispositif T (et par l'intermédiaire des moyens de communication 10 du dispositif T et la connexion physique établie avec le dispositif T') d'un message d'annonce de routeur RA au dispositif T'. Ce message RA comprend, dans un champ ou dans une option du message, le numéro de système autonome ASN(T).

Sur réception du message RA envoyé par le dispositif T, le module 4B du dispositif T' extrait le numéro de système autonome ASN(T) associé au dispositif T et le mémorise, par exemple dans sa mémoire non volatile 7, en association avec le dispositif T (étape F60).

Puis il répond au dispositif T en lui fournissant (annonçant) le numéro de système autonome ASN(T') qui lui est associé (étape F70). Dans l'exemple illustré à la figure 5, le numéro de système autonome ASN(T') est fourni au dispositif T dans un message d'annonce RA, dans un champ ou une option de ce message.

Sur réception du message RA envoyé par le dispositif T', le module 3B du dispositif T extrait le numéro de système autonome ASN(T') associé au dispositif T' et le mémorise, par exemple dans sa mémoire non volatile 7, en association avec le dispositif T' (étape F80). Cette étape de réception du numéro de système autonome ASN(T') constitue une découverte du numéro de système autonome associé au dispositif T' au sens de l'invention.

Une fois l'échange des numéros de systèmes autonomes terminé entre les dispositifs T et T', une session BGP est automatiquement établie entre ces deux dispositifs, de façon connue en soi (étape F90). Cette session BGP peut être établie indifféremment à l'initiative du dispositif T via son module d'établissement 3C ou à l'initiative du dispositif T' via son module d'établissement 4C, par exemple en envoyant un message BGP OPEN tel que prévu par le protocole BGP. Les étapes F50 et F70 peuvent être réalisées dans n'importe quel ordre.

La **figure 6** illustre un troisième mode de réalisation de l'invention. Dans ce troisième mode de réalisation de l'invention, seul le dispositif T est configuré avec un numéro de système autonome ASN(T)=65500 auquel il est associé (étape G10). Cette configuration est réalisée comme dans l'exemple de la figure 4. On suppose que le dispositif T' n'est associé avec aucun numéro de système autonome (*a fortiori,* le dispositif T n'est pas configuré avec un numéro de système autonome associé au dispositif T'). On suppose par ailleurs ici que seuls les moyens 3 du dispositif T sont activés et seuls les moyens 4 du dispositif T' sont activés.

On suppose maintenant qu'une connexion physique est établie entre le dispositif T et le dispositif T', via leurs moyens de communication 10 respectifs de façon identique à ce qui a été décrit à l'étape E30 dans le premier mode de réalisation (étape G20).

L'établissement de la connexion physique entre le dispositif T et le dispositif T' est détectée par le module de détection 3A du dispositif T (étape G30).

Cela déclenche un échange avec le dispositif T' initialisé ici par le module 3B du dispositif T.

Plus spécifiquement, lors de cet échange, le dispositif T, via son module 3B, alloue au dispositif T' un numéro de système autonome noté ASN(T'/T) (troisième numéro de système autonome au sens de l'invention) (étape G40). Ce numéro de système autonome ASN(T'/T) est sélectionné par le module 3B du dispositif T parmi une plage de valeurs prédéterminée. Cette plage de valeurs lui a par exemple été fournie lors de sa configuration par l'administrateur du réseau R ou par le contrôleur 2 ou par un autre dispositif du réseau R selon la façon dont le dispositif T a été configuré. Aucune limitation n'est attachée à la façon dont le module 3B du dispositif T sélectionne le numéro de système autonome ASN(T'/T) parmi la plage de valeurs dont il dispose : cela peut dépendre par exemple du niveau hiérarchique auquel appartient le dispositif T' et de politiques d'allocation de numéros de systèmes autonomes au sein du réseau R prédéfinies, connues du dispositif T, du cluster auquel appartient le cas échéant le dispositif T', etc.

Le dispositif T mémorise en association avec le dispositif T' le numéro de système autonome ASN(T'/T) que son module 3B vient de lui allouer, par exemple dans sa mémoire non volatile 7.

Puis, le module 3B du dispositif T annonce au dispositif T' (étape G50) :
- le numéro de système autonome ASN(T) qui est associé au dispositif T ; et
- le numéro de système autonome ASN(T'/T) qu'il vient d'allouer au dispositif T'.

Dans l'exemple illustré à la figure 6, cette annonce est réalisée via l'envoi par le module 3B du dispositif T (et par l'intermédiaire des moyens de communication 10 du dispositif T et la connexion physique établie avec le dispositif T') d'un unique message d'annonce de routeur RA au dispositif T'. Ce message RA comprend, dans un champ ou dans une option du message, le numéro de système autonome ASN(T), et dans un autre champ ou dans une autre option du message, le numéro de système autonome ASN(T'/T). En variante, deux messages distincts peuvent être utilisés.

Sur réception du message RA reçu du dispositif T, le module 4B du dispositif T' extrait le numéro de système autonome ASN(T) associé au dispositif T et le mémorise, par exemple dans sa mémoire non volatile 7, en association avec le dispositif T (étape G60).

Par ailleurs, le module 4B du dispositif T' extrait du message RA le numéro de système autonome ASN(T'/T) que le dispositif T lui a alloué (étape G70). Puis il détermine si le dispositif T' dispose déjà d'un numéro de système autonome auquel il est associé (étape test G80).

Dans l'exemple envisagé ici, on suppose que le dispositif T' n'a pas de numéro de système autonome auquel il est déjà associé (réponse « non » à l'étape test G80). Le module 4B du dispositif T' configure alors le dispositif T' avec le numéro de système autonome ASN(T'/T) que lui a alloué le dispositif T (étape G90). Cette configuration consiste à mémoriser, par exemple dans la mémoire non volatile 7, le numéro de système autonome ASN(T'/T) alloué par le dispositif T en tant que numéro de système autonome associé au dispositif T'. Un message d'acquittement ou d'acceptation du numéro de système autonome alloué par le dispositif T est envoyé ici au dispositif T (étape G100).

Si en revanche, le module 4B détermine que le dispositif T est déjà associé à un numéro de système autonome (réponse « oui » à l'étape test G80), par exemple à un numéro ASN(T'), le module 4B du dispositif T' rejette le numéro de système autonome ASN(T'/T) alloué par le dispositif T et annonce au dispositif T le numéro de système autonome ASN(T') auquel est déjà rattaché le dispositif T' (quatrième numéro de système autonome au sens de l'invention). Dans l'exemple envisagé à la figure 6, le rejet du numéro de système autonome ASN(T'/T) et l'annonce du numéro de système autonome ASN(T') sont réalisées par le module 4B du dispositif T' au moyen d'un unique message RA envoyé par le dispositif T' au dispositif T (étape G110).

Sur réception du message RA, le module 3B du dispositif T extrait le numéro de système autonome ASN(T') associé au dispositif T' et le mémorise dans sa mémoire non volatile 7 en association avec le dispositif T' en remplacement du numéro de système autonome ASN(T'/T) (étape G120).

Une fois l'échange des numéros de systèmes autonomes terminé entre les dispositifs T et T', une session BGP est automatiquement établie entre ces deux dispositifs, de façon connue en soi (étape G130). Cette session BGP peut être établie indifféremment à l'initiative du dispositif T via son module d'établissement 3C ou à l'initiative du dispositif T' via son module d'établissement 4C, par exemple en envoyant un message BGP OPEN tel que prévu par le protocole BGP.

On note que dans les différents modes de réalisation décrits en référence aux figures 4, 5 et 6, les annonces des numéros de systèmes autonomes ASN(T) et le cas échéant ASN(T'/T), ont été réalisées par le dispositif T' au moyen d'un message RA ou d'un message RS. En variante, d'autres messages peuvent être utilisés, tels que par exemple des messages créés spécifiquement à cet effet, ou via un message d'établissement de session BGP OPEN tel que celui déjà défini dans le protocole BGP, moyennant l'ajout de champs appropriés dans ce message.

En outre, dans les modes de réalisation décrits précédemment, on a envisagé l'établissement d'une seule session BGP entre les dispositifs T et T'. L'invention s'applique également dans un contexte multi-instances BGP. Plus particulièrement, l'invention permet également l'établissement automatique de multiples sessions BGP en parallèle, que ces sessions utilisent les mêmes numéros d'AS ou utilisent des numéros d'AS différents. Si des numéros d'AS différents sont utilisés pour établir des sessions BGP en parallèle, l'étape d'échange mise en œuvre conformément à l'invention entre les dispositifs T et T' comprend alors, de la même façon que ce qui a été décrit précédemment pour un seul numéro d'AS, l'échange (incluant l'annonce, la découverte ou l'allocation) des différents numéros d'AS nécessaires à l'établissement de ces sessions BGP parallèles.

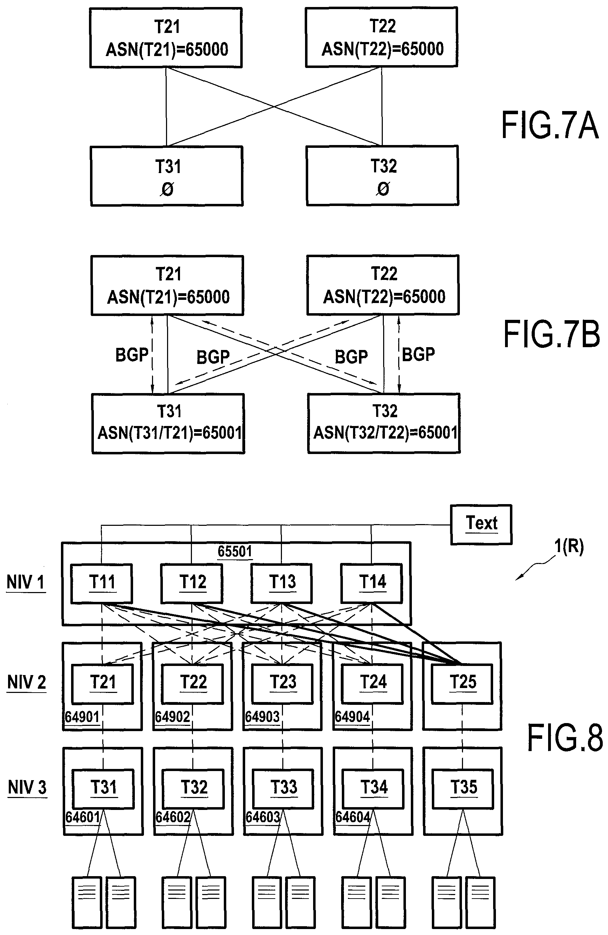

Les figures 7 et 8 illustrent deux exemples d'application de l'invention.

Plus spécifiquement, la **figure 7** illustre un premier exemple d'application dans lequel on considère un réseau comprenant quatre dispositifs de réseau, à savoir les dispositifs T21 et T22 qui appartiennent à un premier niveau hiérarchique, et les dispositifs de réseau T31 et T32 qui appartiennent à un deuxième niveau hiérarchique.

On suppose que les dispositifs T21 et T22 sont configurés préalablement chacun avec un même numéro de système autonome ASN(T21)=65000 et ASN(T22)=65000 qui leur est associé. Le dispositif T21 est également configuré avec une plage de valeurs dans laquelle il peut sélectionner des valeurs de numéros de systèmes autonomes pour allouer à ses dispositifs voisins. On suppose en revanche que les dispositifs T31 et T32 ne sont associés à aucun numéro de système autonome.

On suppose maintenant que les dispositifs T31 et T32 sont reliés physiquement aux dispositifs T21 et T22, et que leurs interfaces de raccordement à cette connexion physique sont identifiées par leurs adresses lien local.

Sur détection d'une connexion physique établie avec le dispositif T31, respectivement avec le dispositif T32, le dispositif T21 alloue un numéro de système autonome ASN(T31/T21)=65001 au dispositif T31, respectivement ASN(T32/T21)=65002 au dispositif T32.

Puis il annonce via un message RA envoyé au dispositif T31, respectivement au dispositif T32, son numéro de système autonome ASN(T21) et le numéro de système autonome ASN(T31/T21), respectivement ASN(T32/T21), qu'il vient de lui allouer.

Sur réception du message RA, le dispositif T31, respectivement le dispositif T32, est configuré avec le numéro de système autonome ASN(T31/T21), respectivement ASN(T32/T21) alloué par le dispositif T21.

Une session BGP est alors établie entre le dispositif T21 et le dispositif T31, respectivement entre le dispositif T21 et le dispositif T32, en utilisant les numéros de systèmes autonomes échangés.

Par ailleurs, le dispositif T31, respectivement le dispositif T32, annonce, par le biais d'un message RA, son numéro de système autonome ASN(T31/T21), respectivement ASN(T32/T21) au dispositif T22, et inversement. Une session BGP est alors établie entre le dispositif T22 et le dispositif T31, respectivement entre le dispositif T22 et le dispositif T32, en utilisant les numéros de systèmes autonomes échangés.

A l'issue de cette procédure, la configuration du réseau est telle qu'illustrée sur la **figure 7B****.**

La **figure 8** illustre un deuxième exemple d'application de l'invention dans lequel on envisage l'ajout de deux dispositifs T25 et T35 dans le réseau représenté à la figure 1 (par souci de simplification le contrôleur 2 n'est pas représenté sur la figure). On suppose que les numéros d'AS alloués aux autres dispositifs du réseau R via la mise en œuvre de l'invention sont ceux représentés sur la figure 8, à savoir :
- 65601 pour les dispositifs T11, T12, T13 et T14 appartenant au premier niveau hiérarchique ;
- 64901 pour le dispositif T21, 64902 pour le dispositif T22, 64903 pour le dispositif T23 et 64904 pour le dispositif T24 appartenant au deuxième niveau hiérarchique ; et
- 64601 pour le dispositif T31, 64602 pour le dispositif T32, 64603 pour le dispositif T33 et 64604 pour le dispositif T34 appartenant au troisième niveau hiérarchique.

Les dispositifs T25 et T35 nouvellement ajoutés ne disposent pas des informations nécessaires pour établir des sessions BGP avec leurs voisins, et donc en particulier des numéros de systèmes autonomes de leurs voisins ni de leurs propres numéros de systèmes autonomes auxquels ils sont rattachés. On suppose que chacun des dispositifs du réseau (incluant les deux dispositifs T25 et T35) sont conformes à l'invention, et que le dispositif T25 est relié via une connexion physique aux dispositifs T11, T12, T13 et T14, et le dispositif T35 est relié via une connexion physique au dispositif T25.

Quand le lien T11-T25 est activé, un message de commande RA est émis par le dispositif de réseau T11 à destination du dispositif T25 comprenant notamment :
- le numéro de système autonome du dispositif T11 (65601) ;
- un numéro de système autonome à utiliser par le dispositif T25 et que lui a alloué le dispositif T11, par exemple 64905 ;
- une taille de cluster du niveau hiérarchique inférieur (ex. taille = 1) ; et
- une plage de valeurs pour l'allocation de numéros de systèmes autonomes à ses voisins appartenant à un niveau hiérarchique inférieur, par exemple [64601-64899].

Sur réception de ce message RA, le dispositif de réseau T25 extrait les éléments précités contenus dans le message et se configure avec ceux-ci.

Puis une session BGP est établie automatiquement entre les dispositifs de réseau T11 et T25, à l'initiative du dispositif de réseau T11 ou du dispositif de réseau T25 à partir des numéros de systèmes autonomes échangés et associés respectivement aux dispositifs T11 et T25.

Si des liens avec les autres dispositifs de réseau du niveau hiérarchique NIV1 sont activés (par exemple, ici avec les dispositifs T11, T12, T13 et T14), alors le dispositif de réseau T25 peut annoncer à son tour son numéro de système autonome et découvrir celui de ses voisins, via des messages RA et RS comme décrit précédemment en référence aux figures 4 à 6. Des sessions BGP sont alors établies automatiquement avec ces dispositifs de réseau.

Concomitamment à ces échanges, le dispositif de réseau T25 alloue, parmi la plage de valeurs qui lui a été communiquée par le dispositif de réseau T11, un numéro de système autonome au dispositif de réseau T35 du niveau hiérarchique NIV3 auquel il est relié et le transmet avec son propre numéro de système autonome dans un message RA reçu au dispositif T35. Suite à ce message, une session BGP est établie automatiquement entre les dispositifs de réseau T25 et T35.

La nouvelle extension du réseau R devient alors opérationnelle (c'est-à-dire que les nouveaux dispositifs de ce réseau T25 et T35 disposent des informations de routage BGP nécessaires et sont visibles par les autres dispositifs de niveau supérieur).

On note que la procédure de configuration automatique du réseau R peut être initialisée à partir de n'importe quel dispositif du réseau R, et notamment depuis n'importe quel niveau hiérarchique. Si un dispositif du réseau reçoit plusieurs propositions d'instructions de configuration de plusieurs voisins en raison de la propagation de proche en proche, il doit choisir une proposition parmi celles qu'il a reçues et en informer ses voisins, comme indiqué précédemment en référence à la figure 6.

L'invention a été décrite ici dans le cadre d'un réseau d'un centre de données. Bien qu'ayant une application privilégiée dans ce contexte, l'invention peut s'appliquer à tout type de réseau utilisant un protocole de routage dynamique, et quelle que soit la politique d'allocation des numéros de systèmes autonomes retenue dans ce réseau.

En outre, l'invention a été décrite ici en référence au protocole de routage dynamique BGP. Toutefois, elle peut également s'appliquer à d'autres protocoles de routage utilisant des numéros de systèmes autonomes, comme par exemple le protocole de routage TRIP défini dans le document IETF RFC 3219. Le protocole de routage TRIP, outre les numéros de systèmes autonomes, utilise en outre un autre identifiant dit de domaine administratif de téléphonie sur IP aussi connu sous l'appellation de ITAD qui peut être échangé entre les dispositifs de réseau de façon identique à ce qui vient être décrit pour les numéros de systèmes autonomes.

## Revendications

1. Procédé d'établissement automatique par un premier dispositif (T) de réseau (R) d'une session conforme à un protocole de routage dynamique avec un deuxième dispositif (T') de réseau, le premier dispositif étant associé à un premier numéro de système autonome (ASN(T)) (E10,F10,G10) et ne connaissant pas de numéro de système autonome associé au deuxième dispositif, ledit procédé comprenant, suite à la détection (E40,F40,G30) par le premier dispositif de l'existence (E30,F30,G20) d'une connectivité avec le deuxième dispositif :
- une étape d'échange (E50-E80,F50-F80,G40-G120) de numéros de systèmes autonomes avec le deuxième dispositif (T') comprenant :
∘ l'annonce (E50,F50,G50) au deuxième dispositif du premier numéro de système autonome (ASN(T)), et
∘ la découverte (E50-E70,F70) d'un numéro de système autonome (ASN(T')), dit deuxième numéro de système autonome, auquel est associé le deuxième dispositif, le deuxième numéro de système autonome étant reçu par le premier dispositif en provenance du deuxième dispositif en réponse à un message de découverte envoyé par le premier dispositif au deuxième dispositif l'invitant à fournir ledit deuxième numéro de système autonome ; et
- une étape d'établissement (E90,F90,G130) avec le deuxième dispositif d'au moins une session selon ledit protocole de routage en utilisant les numéros de systèmes autonomes échangés lors de l'étape d'échange entre le premier et le deuxième dispositif.

2. Procédé selon la revendication 1 comprenant en outre une étape d'envoi par le premier dispositif au deuxième dispositif d'une plage de numéros de systèmes autonomes dans laquelle le deuxième dispositif peut puiser pour allouer un numéro de système autonome à au moins un troisième dispositif.

3. Procédé selon la revendication 1 ou 2 dans lequel une session est établie lors de l'étape d'établissement à l'initiative du premier dispositif (T).

4. Procédé selon la revendication 1 ou 2 dans lequel une session est établie lors de l'étape d'établissement à l'initiative du deuxième dispositif (T').

5. Procédé selon l'une quelconque des revendications 1 à 4 dans lequel le protocole de routage automatique est le protocole BGP (Border Gateway Protocol) ou le protocole TRIP (Telephony Routing over IP).

6. Procédé selon la revendication 5 dans lequel, lorsque le protocole de routage est le protocole BGP, l'annonce du premier numéro de système autonome et/ou la découverte du deuxième numéro de système autonome sont effectuées au moyen de messages d'annonce de routeur et/ou de messages de sollicitation de routeur.

7. Procédé selon la revendication 5 dans lequel, lorsque le protocole de routage est le protocole BGP, l'annonce au deuxième dispositif du premier numéro de système autonome est effectuée au moyen d'un message d'établissement de session BGP OPEN envoyé par le premier dispositif au deuxième dispositif.

8. Procédé selon la revendication 5 dans lequel, lorsque le protocole de routage est le protocole TRIP, l'étape d'échange comprend en outre :
- l'annonce d'un premier identifiant de domaine administratif de téléphonie sur IP associé au premier dispositif ; et
- la découverte d'un deuxième identifiant de domaine administratif de téléphonie sur IP associé au deuxième dispositif.

9. Procédé de communication avec un premier dispositif (T) de réseau mis en œuvre par un deuxième dispositif (T') de réseau, ledit procédé comprenant :
- une étape d'échange de numéros de systèmes autonomes avec le premier dispositif comprenant :
∘ la réception en provenance du premier dispositif d'un numéro de système autonome, dit premier numéro de système autonome, associé au premier dispositif ;
∘ la mémorisation du premier numéro de système autonome en association avec le premier dispositif ;
∘ la fourniture au premier dispositif d'un numéro de système autonome, dit deuxième numéro de système autonome, auquel le deuxième dispositif est associé, en réponse à un message de découverte reçu en provenance du premier dispositif invitant le deuxième dispositif à fournir ledit deuxième numéro de système autonome ; et
- une étape d'établissement avec le premier dispositif d'au moins une session selon ledit protocole de routage en utilisant les numéros de systèmes autonomes échangés entre le premier et le deuxième dispositif.

10. Programme d'ordinateur (PROG3,PROG4) comportant des instructions pour l'exécution des étapes du procédé d'établissement automatique selon l'une quelconque des revendications 1 à 8 ou comportant des instructions pour l'exécution des étapes du procédé de communication selon la revendication 9 lorsque ledit programme est exécuté par un ordinateur.

11. Support d'enregistrement (8) lisible par un ordinateur sur lequel est enregistré un programme d'ordinateur selon la revendication 10.

12. Dispositif de réseau (T), dit premier dispositif, configuré pour établir automatiquement une session conforme à un protocole de routage dynamique avec un deuxième dispositif de réseau, le premier dispositif étant associé à un premier numéro de système autonome et ne connaissant pas de numéro de système autonome associé au deuxième dispositif, ledit premier dispositif comprenant une pluralité de modules, activés suite à la détection par le premier dispositif de l'existence d'une connectivité avec le deuxième dispositif, ladite pluralité de modules comprenant :
- un module d'échange (3B) de numéros de systèmes autonomes avec le deuxième dispositif, configuré pour :
∘ annoncer au deuxième dispositif le premier numéro de système autonome ; et
∘ découvrir un numéro de système autonome, dit deuxième numéro de système autonome, auquel est associé le deuxième dispositif, le deuxième numéro de système autonome étant reçu par le premier dispositif en provenance du deuxième dispositif en réponse à un message de découverte envoyé par le premier dispositif au deuxième dispositif l'invitant à fournir ledit deuxième numéro de système autonome; et
- un module d'établissement (3C), configuré pour établir avec le deuxième dispositif au moins une session selon ledit protocole de routage en utilisant les numéros de systèmes autonomes échangés entre le premier et le deuxième dispositif.

13. Dispositif de réseau (T'), dit deuxième dispositif, configuré pour établir automatiquement une session conforme à un protocole de routage dynamique avec un premier dispositif de réseau, ledit deuxième dispositif comprenant :
- un module d'échange (4B) de numéros de systèmes autonomes avec le premier dispositif, configuré pour :
∘ recevoir en provenance du premier dispositif un numéro de système autonome, dit premier numéro de système autonome, associé au premier dispositif ;
∘ mémoriser le premier numéro de système autonome en association avec le premier dispositif ; et
∘ fournir au premier dispositif un numéro de système autonome, dit deuxième numéro de système autonome, auquel le deuxième dispositif est associé, en réponse à un message de découverte reçu en provenance du premier dispositif invitant le deuxième dispositif à fournir ledit deuxième numéro de système autonome ; et
- un module d'établissement (4C), configuré pour établir avec le premier dispositif au moins une session selon ledit protocole de routage en utilisant les numéros de systèmes autonomes échangés entre le premier et le deuxième dispositif.

14. Système de communication (1) comprenant au moins un premier dispositif (T) de réseau selon la revendication 12 et au moins un deuxième dispositif (T') de réseau selon la revendication 13, configurés pour établir automatiquement entre eux une session conforme à un protocole de routage dynamique.
